# EUROPÄISCHE PATENTANMELDUNG

(11) **EP 0 814 574 A2**
(43) Veröffentlichungstag der Anmeldung: **29.12.1997**
(21) Anmeldenummer: 97109586.4
(22) Anmeldetag: 12.06.1997
(51) Int. Cl.: H04B 3/32

(54) **Schaltungsanordnung zur Fernnebensprechkompensation**

(30) Priorität: 21.06.1996 DE 19624927
(71) Anmelder: SIEMENS AKTIENGESELLSCHAFT, 80333 München (DE)
(72) Erfinder: Schmücking, Dirk, Dipl.-Ing., 81545 München (DE); Wörner, Achim, Dipl.-Ing., 82031 Grünwald (DE)

(57) **Zusammenfassung**

Schaltungsanordnung zur Fernnebensprechkompensation, insbesondere für Hybride Glasfaser/Kupferdoppelader-Systeme, bei der die Koeffizienten der Filtereinheiten jeweils den Übertragungskanälen adaptiv angepaßt werden.

## Beschreibung

Hybride Glasfaser/Kupferdoppelader-Systemarchitekturen (Hybrid Fiber Twisted Pair, HFTP) ermöglichen die Bereitstellung von symmetrischen oder asymmetrischen Teilnehmeranschlüssen mit Datenraten von 6,25 bis 50 Mbit/s über vorhandene Kupferdoppelader-Anschlußkabel. Bei der Übertragung über die Kupferdoppeladern treten jedoch beispielsweise folgende Störungen auf: Echos, Nebensprechen, Beeinflussung durch Amateurfunksysteme (Radio Frequency Interference (RFI)), Impulsstörungen und weißes Rauschen. Welche dieser Störungen dominiert und somit systembegrenzend wird, hängt vom ausgewählten Übertragungsverfahren ab.

Bei ISDN und HDSL (High Bitrate Digital Subscriber Line) werden vorzugsweise Frequenz- und Zeitgleichlageübertragung mit Echokompensation angewandt. Mit zunehmender Übertragungsbandbreite wird jedoch die Nahnebensprech-Übertragungsfunktion zu einem systembegrenzenden Faktor. Für hochbitratige Kupferübertragungssysteme werden Zeitgetrenntlage-(TDM - Time Division Multiplex)und Frequenzgetrenntlage-(FDM - Frequenz Division Multiplex) Verfahren bevorzugt. Bei TDM werden Nahnebensprechstörer und Echos durch die zeitliche Trennung des Datenstroms zum Teilnehmer (Downstream-Übertragung) und des Datenstroms vom Teilnehmer (Upstream-Übertragung) vermieden, während dies bei FDM-Systemen durch die Übertragung in verschiedenen Frequenzbändern erreicht wird. Die Reichweitenbegrenzung von TDM- und FDM-Systemen wird durch das Fernnebensprechen von anderen Systemen, wie beispielsweise dem Very high bitrate Digital Subscriber Line VDSL-System, im gleichen Kabel verursacht. Während bei TDM-Systemen der Realisierungsaufwand, abgesehen von der Entzerrung, maßgeblich durch die Synchronisation der verschiedenen Sender am Kabelverzweiger (KVz) und durch eine notwendige Pufferung der Daten bestimmt wird, liegt der Aufwand bei FDM-Systemen vor allem in den digitalen und analogen Trennfiltern. FDM-Systeme werden durch Fernnebensprechen (FEXT) oder weißes Rauschen (AWGN) begrenzt. Welcher Störungstyp dominiert, ist durch die Stufenzahl des Modulationsverfahrens (z.B. QAM), die Leitungslänge und die zulässige Sendeleistung gegeben. Entscheidende Systemanforderungen an HFTP-Systeme sind Robustheit, die Garantie einer hohen Verfügbarkeit und die Kosten für das Gesamtsystem. Aufgrund einer eingeschränkten Übertragungsqualität bei Übertragungen über Kabel bei hohen Frequenzen wird international gefordert, daß eine obere Grenzfrequenz von 13-15 MHz von HFTP-Systemen nicht überschritten wird.

Bei bisherigen Ansätzen für hybride Glasfaser/Kupferdoppelader-Systemarchitekturen werden die einzelnen Übertragungssysteme als voneinander unabhängig betrachtet. Bei z.B. 25 HFTP-Systemen in einem Kabel ergibt sich ein gaußverteiltes, farbiges Rauschen. Beim unteren Übertragungsband eines Frequenzgetrenntlage-Verfahrens (FDM-System) setzt die durch das weiße Rauschen (AWGN) geprägte Begrenzung aufgrund der relativ geringen Kabeldämpfung erst bei großen Leitungslängen >1 km für eine 16-stufige Quadraturamplituden-Modulation (16-QAM) ein. Infolge der langsamen Zunahme einer relativen Störleistung durch Fernnebensprechen mit der Leitungslänge lassen sich in einer FEXT-dominierten Störumgebung große Reichweiten erzielen. Bei der symmetrischen Datenübertragung ist für den oberen der beiden Übertragungskanäle ein Modulationsverfahren mit geringer Bandbreiteneffizienz (z.B. 4-QAM) vorteilhaft, wenn keine strikte Bandbreitenbegrenzung besteht. Bei einer Reduzierung der verfügbaren Bandbreite und der damit verbundenen bandbreiteneffizienteren Datenübertragung wird zwar die Fernnebensprechdämpfung (FEXT) aufgrund der niedrigeren Trägerfrequenz erhöht, die Zunahme eines Mindest-Signal/Rausch-Abstandes (SNR) um ca. 6 dB führt zu einer relativen Zunahme des FEXT-Störpegels und einer entsprechenden Verringerung der Reichweite.

In dem Artikel "Multichannel Signal Prozessing for Data Communication in the Presence of Crosstalk" in IEEE Transaction on Communication, Vol. 42, No.2/3/4, Februar/März/April 1994 von M. Honig, P. Crespo und K.Steiglitz ist eine Systemarchitektur zur Verminderung der einschränkenden Einflüsse auf eine Datenübertragung beschrieben.

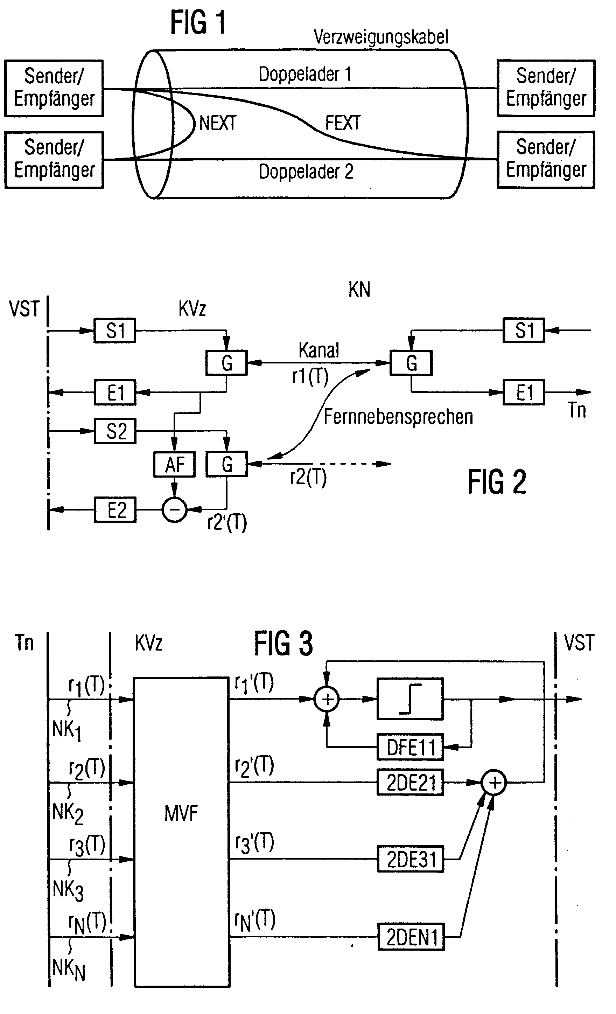

In dem Artikel wird vorgeschlagen, mehrere Kupferübertragungssysteme eines vielpaarigen Kabels zu einem "Vektortransceiver" zusammenzufassen, d.h. die einzelnen Sender/Empfänger werden so miteinander verbunden, daß NEXT und FEXT kompensiert werden können. Die Anordnung eines zweidimensionalen Entzerrers zur FEXT-Kompensation ist in Figur 3 abgebildet. Durch den 2-D-Entzerrer können neben Intersymbolinterferenzen (ISI) auch Störungen durch Nachbarkanäle eliminiert werden. Bei diesem Übertragungssystem wird jedoch angenommen, daß alle Twisted-Pair-Leitungen die gleiche Leitungslänge haben, so daß der gleiche Feedforward-Entzerrer (Preequalizer) für alle Leitungen verwendet werden kann. Die Nachläufer einer Fernnebensprech-Impulsantwort werden mit adaptiven Entzerrern 2DE 21,..., 2DE N1 nach dem Prinzip eines linearen 2-dimensionalen Entzerrers (2DE N1) eliminiert. Dabei wird für die Intersymbolinterferenzen(ISI)-Elimination ein Entzerrer mit quantisierter Rückkopplung verwendet.

Die bekannte Filter-Schaltungsanordnung bringt jedoch wie oben bereits angedeutet den Nachteil mit sich, daß alle Verbindungsleitungen jeweils an einem einzigen Punkt beginnen und enden. In einem realen Kommunikationsnetz sind jedoch die Verbindungswege zwischen den verschiedenen Teilnehmerendstellen und beispielsweise einen Kabelverzweiger unterschiedlich lang.

Das System weist zusätzlich den Nachteil auf, daß auf der Teilnehmerseite kein Vektortransceiver gebildet werden kann, da die Übertragungssysteme räumlich verteilt sind. Das bekannte System bringt außerdem den Nachteil mit sich, daß die Ausgangssignale des Multikanal-Vorfilters MVF mit Rauschen überlagert sind.

Aufgabe der Erfindung ist es, eine Filterachitektur zur Vermeidung von Fernnebensprechen für ein Kommunikationsnetz mit einem Hybrid Glasfaser/Kupferdoppelader System anzugeben.

Die Aufgabe wird durch die Merkmale des Patentanspruchs 1 gelöst.

Die Schaltungsanordnung weist den Vorteil auf, daß unabhängig von der Länge der jeweiligen Verbindungswege das Fernnebensprechen unterdrückt und der Signal/Rausch-Abstand wesentlich erhöht wird.

Durch die Erhöhung des Signal/Rausch-Abstandes ist eine Erhöhung des Produktes aus Bandbreite und Leitungslänge erreichbar und eine größere Toleranz bei der Einstellung einer Upstream-Sendeleistung möglich.

Weitere vorteilhafte Ausbildungen der Erfindung sind in den Unteransprüchen angegeben.

Weitere Besonderheiten der Erfindung werden aus der nachfolgenden Erläuterung eines Ausführungsbeispiels anhand von Zeichnungen ersichtlich.

Es zeigen:
- Figur 1: Nah- und Fernnebensprechen bei Übertragungssystemen,
- Figur 2: eine schematische Anordnung zur Behebung von Fernnebensprechen,
- Figur 3: die Elimination von Fernnebensprechen nach dem Stand der Technik,
- Figur 4: eine Systemarchitektur zur Elimination von Fernnebensprechen und
- Figur 5: eine Systemarchitektur zur Fernnebensprechkompensation mit 2-D-DFE Filterelemente.

Im Gegensatz zu Systemen mit einer Echokompensation (ISDN, HDSL) wird die Leistungsfähigkeit von Frequenzgetrenntlage-Verfahren bei Hybrid Glasfaser/Kupferdoppelader-Systemen primär nicht durch Nahnebensprechen NEXT, sondern durch Fernnebensprechen FEXT begrenzt. Bei großen Leitungslängen erfolgt die Begrenzung des Systems durch weißes Rauschen AWGN.

Figur 1 zeigt die Beeinflussung durch Nebensprechstörungen die sich in Nahnebensprechen (NEXT) und Fern-Nebensprechen (FEXT) aufteilen. Diese Nebensprechstörungen entstehen im Wesentlichen durch Kopplung von Sendeenergie auf andere im Verzweigungskabel geführte Leitungen.

In den Figuren 3, 4 und 5 ist der Übersicht halber nur die FEXT-Kompensation für einen Kanal rn(T) dargestellt. Für alle anderen Kanäle sind gleiche Filteranordnungen zu verwenden.

Figur 2 zeigt einen Ausschnitt eines Kommunikationsnetzes KN. In diesem sind Sender- S1 und Empfängereinheiten E1 auf der Teilnehmerseite Tn und Sende- und Empfangseinheiten S1 ,...,Sn; E1, ...,En auf der Seite des Kabelverzweigers KVz angeordnet. Kabelverzweiger KVz und Teilnehmerendstellen Tn sind durch einen Datenübertragungskanal Nkn verbunden. Eine Gabelschaltung G bildet jeweils die Verbindungseinheit zwischen Übertragungskanal Nkn, Sende- Sn und Empfangsrichtung En. Die Störung durch Fernnebensprechen findet auf der Übertragungsstrecke statt (siehe auch Fig. 1). Die Daten zwischen den Kommunikationsendstellen werden mit dem Frequenzgetrenntlage-Verfahren übertragen. Das obere Frequenzband wird für eine Übertragung vom Teilnehmer Tn zur Vermittlungsstelle und das untere Frequenzband wird für eine Datenübertragung von der Vermittlungsstelle zum Teilnehmer Tn verwendet. Bei dieser Anordnung ist die maximale Reichweite für eine symmetrische Datenübertragung durch das obere, zunächst durch Fernnebensprechen FEXT begrenzte Frequenzband gegeben. Eine Steigerung der Reichweite z.B. zwischen KVz und Tn läßt sich durch eine FEXT- Kompensation in einem Kabelverzweiger KVz erreichen.

Bei der in Fig. 2 dargestellten Anordnung wird am Kabelverzweiger KVz die vom System 1 verursachte Störkomponente 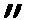 Fernnebensprechen 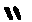 im Empfangssignal r2 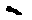 (T), mit einem aus dem Empfangssignal r1(T) nachgebildeten Fernnebensprechsignal eliminiert. Diese Auslöschung des Fernnebensprechens wird durch ein adaptives Filter FK erreicht.

In Figur 3 ist ein zweidimensionaler Entzerrer zur FEXT-Kompensation, wie er aus dem Stand der Technik bekannt ist, abgebildet. Bei dieser Schaltungsanordnung werden Empfangssignale r1(T),...,r4(T) einem Multikanal-Vorfilter MVF zugeführt und weitgehendst vom Vorläufern der Kanalimpulsantwort bereinigt. Dem Multikanal-Vorfilter MVF ist ein 2-D-Entzerrer nachgeordnet. Mit diesem Entzerrer können wie bereits eingangs erwähnt Intersymbolinterferenzen ISI und Störungen durch Nachbarkanäle eliminiert werden.

Die Nachläufer einer FEXT-Impulsantwort (Intersymbolinterferenz) werden mit einem adaptiven Filter 2DE 21, 2DE N1 nachgebildet und nach dem Prinzip eines linearen 2-dimensionalen Entzerrers eliminiert. Die Intersymbolinterferenzen ISI (Impulsnachläufer) werden dabei durch die quantisierte Rückkopplung aus dem zu übertragenden Datenströmen rN 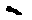 (T) eliminiert. Das durch die Sendeleistung der Systeme 2 bis N auf dem Nutzkanal NK1 verursachte Fernnebensprechen im Empfangssignal r1(T) wird dadurch verringert, daß von den Datenströmen r2(T) bis rN(T) in den einzelnen Kanälen jeweils das Fernnebensprechen nachgebildet wird und vor einer Elimination der Impulsnachläufer im Datenstrom r1(T) von diesem subtrahiert wird.

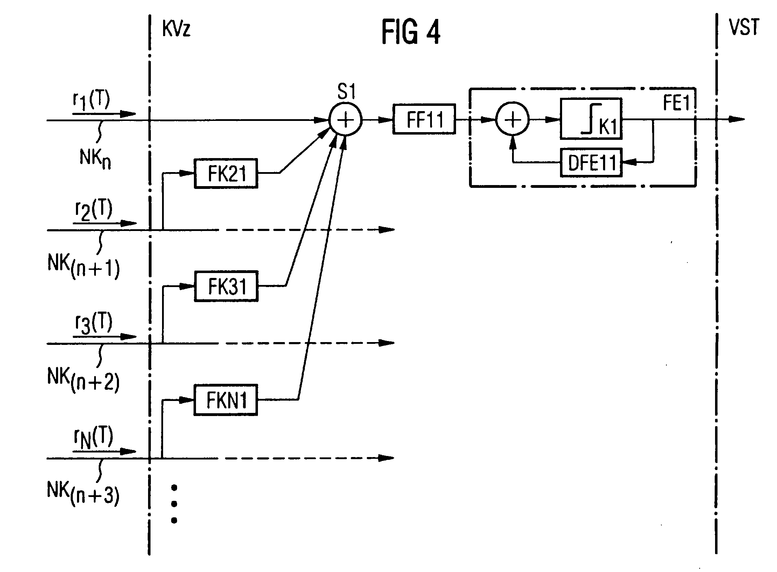

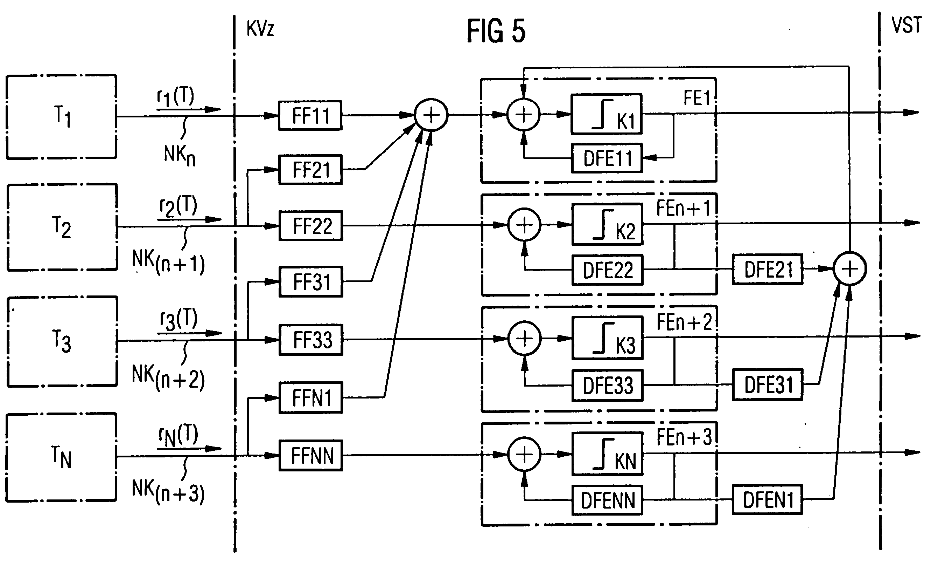

In Figur 4 und 5 ist ein Ausschnitt eines Hybrid Fiber Twisted Pair HFTP-Systems mit einer FEXT-Kompensation dargestellt. Zur Datenübertragung wird ein Frequenzmultiplexverfahren angewendet.

Die abgebildeten Schaltungsanordnung ist beispielsweise bei einem Übergabepunkt zwischen einer Kupferdoppelader/Glasfasertechnik in einem Kabelverzweiger des Kommunikationsnetzes KN angeordnet.

Durch eine FEXT-Kompensation wird der Signal/Rausch-Abstand bzw. die Systemreserve bei einer Fernnebensprechen-Begrenzung erhöht.

In Figur 4 ist eine Schaltungsanordnung, gebildet aus den Filtereinheiten FK (N+1)1, FF 11, K1 und DFE 11, dargestellt. Die Filtereinheit:
FK N1 bildet jeweils die gesamte FEXT-Impulsantwort nach, die das auf dem Nutzkanal NK(n+1),... geführte Signal auf dem betrachteten Nutzkanal Nkn erzeugt,
FF 11 eliminiert die Vorläufer der Impulsantwort des Nutzkanals Nkn und DFE 11 eliminiert die Nachläufer der Impulsantworten des Nutzkanals Nkn.

Durch den Entscheider Kn wird das den Daten überlagerte Rauschen eliminiert.

Von den, auf den Nutzkanälen NK(N+1),...,NK(N+3),... übertragenen Signalen wird jeweils die gesamte Fernnebensprech-Impulsantwort in den Filtereinheiten FK21,...., FKN1 des jeweiligen Datenstromes nachgebildet. Die durch die Faltung der Empfangssignale mit den nachgebildeten FEXT-Impulsantworten approximierte FEXT-Störung wird an einem Summationspunkt S1 auf dem Empfangssignal des Nutzkanals Nkn addiert und so die FEXT-Störung eliminiert. Nachfolgend wird das Nutzsignal r1(T) durch die Filtereinheit FF11 von den Impulsvorläufern der FEXT-Impulsantwort bereinigt und durch den Komparator K1 das dem Nutzsignal r1(T) noch überlagerte Rauschen eliminiert. Durch die Rückführung des rauschfreien Datenstroms über die Filtereinheit DEF 11 werden Impulsnachläufer im Datenstrom r1(T) eliminiert.

Sämtliche Filter (FEXT Kompensatoren (FK), Impuls-Vorläufer-Entzerrer FF(Feed Forward), adaptiver entscheidungs-rückgekoppelter Entzerrer DFE) sind als adaptive Transversalfilter (Finite Impulse Response Filter, FIR) ausgebildet: Die dazu notwendigen Filterkoeffizienten werden mit dem Least Mean Square Algorithmus (LMS) oder dem Vorzeichen-LMS-Algorithmus automatisch so eingestellt, daß das mittlere Quadrat des Restfehlers aus Intersymbolinterferenz ISI und Interkanalinterferenz (Fernnebensprechen) minimiert wird.

Eine Hardwarearchitektur für FF-Filter und der LMS-Algorithmus sind aus K. Parhi, 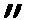 Concurrent Cellular VLSI Adaptive Filter Architectures 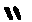 , IEEE Transactions on Circuits and Systems, Vol. CAS-34, No. 10, October 1987 bekannt.

Für die DFE-Filter kann eine ähnliche Struktur verwendet werden. Als Beispiel sei hier auf 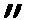 A60-MBaud, 480-Mbit/s, 256-QAM Decision-Feedback Equalizer4 in 1,2 CMOS, Fang Lu and Henry Samueli, IEEE Custom Integrated Circuits Conference verwiesen.

Unterschiedliche Leitungslängen vom Teilnehmer zum Kabelverzeiger können durch entsprechende Koeffizienten bei den Filtereinheiten FK N1 berücksichtigt werden.

In Figur 5 ist eine Schaltungsanordnung zur Kompensation von Fernnebensprechen dargestellt, das ebenfalls unabhängig von der Länge der Kupferdoppeladern zwischen Teilnehmerendstelle Tn und Kabelverzweiger KVz ist.

Diese Schaltungsanordnung weist folgende Filtereinheiten auf:
Filter FF(NN) zur Elimination der Vorläufer der Impulsantwort des Signals auf dem Nutzkanal Nkn,
Filter FF(N1) zur Nachbildung der Vorläufer der FEXT-Impulsantwort,
Filter DFE(NN) zur Elimination der Impulsnachläufer des Signals auf dem jeweiligen Nutzkanal Nkn und DFE(N1) zur Elimination der Impulsnachläufer der FEXT-Impulsantwort.
Der Entscheider Kn trennt das Rauschen vom Nutzsignal rn(T).

Bei dem zweidimensionalen entscheidungsrückekoppelten Filter 2-D-DFE ist nur das Eingangssignal des Feedforward-Filters (FF) mit Rauschen behaftet, während die Feedback-Filter DFE 11,..., DFE NN mit einem entstörten Signal angesteuert werden. Durch diese Anordnung kann ein sehr hoher Gewinn im Signal/Rausch-Abstand erzielt werden. Ferner bietet die auf den 2-D-entscheidungs-rückgekoppelten Entzerrer DFE basierten FEXT-Kompensation den Vorteil einer größeren Toleranz bei der Einstellung der Sendeleistung vom Teilnehmer zur Vermittlungsstelle (Upstreamübertragung).

Wenn die Signale r 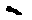 2(T), r 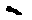 3(T), r 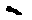 N(T) als Eingangssignale für FEXT-Kompensatoren verwendet werden und der Signal/Rausch-Abstand SNR der Signale rN(T) z.B. 20 dB beträgt, ist die maximal erzielbare Kompensationsdämpfung auf 20 dB begrenzt, was im Vergleich bei einer höheren Kompensationsdämpfung zu Verlusten im Signal/Rausch-Abstand SNR am Entscheider K1,...,Kn führt.

Die in Figur 5 gezeigte Schaltungsanordnung ist für die FEXT-Kompensation besonders geeignet, da die FEXT-Impulsantwort gegenüber der Impulsantwort des Nutzkanals zeitlich verzögert ist, so daß der überwiegende Teil der Impulsantwort durch die DFE-Filter und nicht durch die mit Rauschen behafteten Impuls-Vorläufer-Entzerrer Filter FF-Filter kompensiert wird.

## Patentansprüche

1. Anordnung zur Fernnebensprechkompensation,
**dadurch gekennzeichnet**,
daß eine Reihenschaltung mit einem Summierer (S1), einem ersten Filter (FF(NN)) und einer ersten Filtereinheit (Kn; DFE(NN)) vorgesehen ist, der über eine erste Datenleitung ein erster Datenstrom (rn(T)) zugeführt wird und
daß dem Summierer (S1) ein erstes Korrektursignal zugeführt wird, das aus in der Nähe zur ersten Datenleitung über weitere Datenleitungen übertragenen Datenströmen gebildet wird.

2. Anordnung nach Anspruch 1,
**dadurch gekennzeichnet**,
daß das erste Filter (FF(NN)) dem Summierer (S1) nachgeordnet ist.

3. Anordnung nach Anspruch 1,
**dadurch gekennzeichnet**,
daß das erste Filter (FF(NN)) vor dem Summierer (S1) angeordnet ist.

4. Anordnung nach Anspruch 2 oder 3,
**dadurch gekennzeichnet**,
daß das erste Filter (FF(11),...,FF(NN)) ein adapitives Filter ist, durch das die Vorläufer der Impulsantwort des Nutzkanals (Nkn) eliminiert werden.

5. Anordnung nach Anspruch 2,
**dadurch gekennzeichnet**,
daß das erste Korrektursignal jeweils durch ein zweites Filter (FK(21),...,FK(N1)) gebildet wird, das die Fernnebensprech-Impulsantwort (FEXT) des an seinem Eingang anliegenden anderen Datenstromes (r(n+1)(T),....,r(n+x)(T)) bildet.

6. Anordnung nach Anspruch 1,
**dadurch gekennzeichnet**,
daß die erste Filtereinheit (FE1) aus einem Entscheider (Kn) und einer, in einem Rückkoppelzweig am Entscheider (Kn) angeordneten dritten Filter (DFE(NN)) gebildet ist.

7. Anordnung nach Anspruch 5,
**dadurch gekennzeichnet**,
daß das dritte Filter (DFE(NN)) ein adaptives Filter ist, durch das die Nachläufer der Impulsantwort des jeweiligen Nutzkanals (Nkn) eliminiert werden.

8. Anordnung nach Anspruch 3,
**dadurch gekennzeichnet**,
daß das Korrektursignal jeweils durch ein viertes Filter (FF(21),...,FF(N1)) gebildet wird, durch das die Vorläufer der Impulsantwort des Fernnebensprechen (Nkn) der weiteren Datenströme eliminiert werden.

9. Anordnung nach einem der vorhergehenden Ansprüche,
**dadurch gekennzeichnet**,
daß ein fünftes Filter (DFE(N1)) vorgesehen ist, dessen Eingang mit dem Ausgang einer weiteren ersten Filtereinheiten (FE(N+1)) verbunden ist,
daß dem Eingang der weiteren ersten Filtereinheiten (FE(N+1)) das Ausgangssignal des vierten Filters (FF(NN)) zugeführt wird und
daß dem Summierer (S1) jeweils das Ausgangssignal des fünften Filters (DFE(N1)) zugeführt wird.

10. Anordnung nach einem der vorherigen Ansprüche,
**dadurch gekennzeichnet**,
daß diese in einem Übergabepunkt zwischen Kupferdoppelader und Glasfaser angeordnet ist.

11. Anordnung nach einem der vorherigen Ansprüche,
**dadurch gekennzeichnet**,
daß dies in einem Kabelverzweiger (KVz) angeordnet ist.
